Europäisches Patentamt

European Patent Office

Office européen des brevets

(11) Publication number: **0 000 823**
**B1**

## EUROPEAN PATENT SPECIFICATION

(45) Date of publication of patent specification: **18.01.89**

(51) Int. Cl.⁴: **B 65 D 1/14,** B 65 D 43/10

(21) Application number: **78300221.5**

(22) Date of filing: **01.08.78**

(54) Open-mouth containers and method and mould core for making them.

(30) Priority: **08.08.77 GB 3315777**
**28.11.77 GB 4934577**

(43) Date of publication of application:
**21.02.79 Bulletin 79/04**

(45) Publication of the grant of the patent:
**18.01.89 Bulletin 89/03**

(84) Designated Contracting States:
**BE CH DE FR GB LU NL SE**

(56) References cited:
**GB-A-1 152 096**
**GB-A-1 207 017**
**US-A-3 107 838**
**US-A-3 133 662**

(73) Proprietor: **IMPERIAL CHEMICAL INDUSTRIES
PLC**
**Imperial Chemical House Millbank**
**London SW1P 3JF (GB)**

(72) Inventor: **Robinson, James Derek**
**3 The Jinnings**
**GB-Welwyn Garden City Hertfordshire (GB)**

(74) Representative: **Rhind, John Lessels et al**
**Imperial Chemical Industries PLC Legal
Department: Patents Po Box 6**
**Welwyn Garden City Herts, AL7 1HD (GB)**

# Description

This invention relates to begin with, to an openmouth container (such as a paint can) suitable for lidding and adapted to be easily shaped using moulds comprising core and preferably also cavity components.

British patent specification 1 025 316 discloses a lidded open-mouth container in which the lid overhangs the body of the container. Such overhanging lids space apart the containers wasting storage space and when the lidded containers form a line issuing from a lidding machine, it is found that the line lacks stability if the bodies of adjacent containers are not contiguous.

British patent specification 1 207 017 discloses a liddable open-mouth container having longitudinal protruding portions and longitudinal portions inset relative to the protruding portions all of which portions lie outside the perimeter of the mouth so that the mouth is defined by inwards extensions of these portions which means that the mouth lies inboard of the body and so it can be closed by a lid which does not overhang the body. But it also means that the perimeter of the mouth undercuts the body. Therefore, if the container is to be shaped using a mould having a core component, then the core can only be withdrawn through the undercutting perimeter by using complex techniques involving five or more movements of segments of the core. Such segmented cores are generally prone to excessive wear and also cannot be cooled quickly enough to be used economically in the mass production processes used in shaping articles such as disposable containers.

One problem underlying this invention is to provide a container (1) which can be placed next to a similar container with the bodies of the containers contiguous to each other even when they are lidded and (2) which can be shaped around the core component of a mould (especially the core component of a core-and-cavity mould) using a relatively simple technique. It will be seen that British Specification 1,207,017 addresses the different problem of strengthening a container having a welded foil lid so that when stacked it can withstand shock loads in transit and so that the aperture will not buckle inwards when a load is applied and break the lid seal.

Accordingly the invention provides an openmouth one-piece container comprising a generally cylindrical body having longitudinal inset portions and shaped to provide an openmouth which can receive a lid, characterised in that it comprises:

(a) a body composed of at least two longitudinal protruding portions the inner surface of each protruding portion lying outside the perimeter of the open-mouth and at least two longitudinal portions inset relative to the protruding portions, the said portions having inner surfaces which define the inner surface of the body, and

(b) extensions of the protruding and inset portions of the body which extensions define the perimeter of the mouth of the container wherein the mouth-defining extension of each protruding portion extends inwardly of the inner surface of that protruding portion and in that

(c) the protruding portions lie sufficiently far beyond the perimeter of the open-mouth that an applied lid will not overhang the protruding portion,

(d) the inner surface of each inset portion lies not outside the perimeter of the mouth so that the mouth-defining extension of each inset portion does not extend inwardly of the inner surface of that inset portion, and,

(e) the dimensions of the inner surfaces of the protruding and inset portions are such that if the inset portion were notionally removed from the body and the protruding portions were notionally moved inwards until they touched along their longitudinal boundaries, then the notional inner surface defined by the inner surfaces of the touching protruding portions would be capable of being passed through the mouth of the container. The words "capable of being passed through the mouth of the container" also apply in the case where it is necessary and tolerable for the perimeter of the mouth to undergo a small temporary resilient deformation to permit passage of the notional inner surface.

"Longitudinal" means lengthwise of the container and the length of tlhe container is measured along its principal axis, namely the axis which passes through both its base and its mouth. "Transverse" means in a plane perpendicular to the principal axis. It will be noted that in the above container, the protruding portions facilitate stacking in contrast to British specification 1,207,017 where stacking is facilitated by the inset portions. In contrast, in this invention the latter facilitate removal of a moulding core.

The invention also provides a process for making the mentioned containers which comprises:

(a) shaping material around the core component of a mould which defines inner surface of the container wherein the core comprises at least two first segments which define the inner surfaces of the protruding portions of the body and which are separated from one another by at least one second segment which defines at least part of the inner surfaces of the inset portions of the body,

(b) withdrawing the second segment of segments through the mouth of the newly shaped container,

(c) moving the first segments into space vacated by the second segment of segments.

(d) withdrawing the first segments together through the mouth.

If necessary means (preferably a cavity component of the mould) are employed to shape the outside surface of the container.

The invention provides a core component for use in a process as described in the preceding paragraph, the core component comprising at least two (preferably two or three) first segments separated from one another by at least one (and preferably only one) second segment, wherein the first segments define the inner surfaces of the protruding portions of the body and their undercutting extensions and the second segment defines at least part of the inner surfaces of the inset portions of the body and the segments have dimensions such that after withdrawing the second segment through the mouth of a container moulded by the process and moving the first segments into the space vacated by the second segment, the first segments can be withdrawn together through the mouth. Also, the invention further provides a mould comprising a combination of such a core and a cavity component which defines the outer surface of the container. Preferably, the segments of the core are tapered to facilitate withdrawal of the second segment or segments.

A container according to this invention even when suitably lidded can still be placed next to a similar lidded container so that the bodies of the containers are contiguous. This is possible because the protruding portions of the body lie outside the perimeter of the mouth so that a lid of suitable dimensions applied to the mouth will not overhang at least part of the protruding portions.

The containers can be shaped around a core component of a mould using a relatively simple core which can be withdrawn through the mouth of the newly shaped container by an operation which needs only three movements of segments of the core although extra movements can be added if desired. This is possible because the internal surface of each inset portions of the body part of the container is not undercut by the perimeter of the mouth. Therefore, the (or each) second segment of the core (which defines at least part of these internal surfaces) can be directly withdrawn through the mouth and the first segments moved into space vacated by the second segment or segments whereafter the first segments too can be withdrawn through the mouth.

The protruding and inset portions of the body may be curved or flat. Preferably, the protruding and inset portions are of approximately uniform thickness so that the inner surface of a portion is of substantially the same shape as the outer surface of the portion.

Typical containers having protruding and inset portions of uniform thickness may comprise portions all of which are curved in section transverse to the principal axis of the container, the protruding portions being of greater curvature than the inset portions so producing a lobate container in which the protruding portions constitute the lobes. Preferably, a bi-lobate container in section transverse to the principal axis has the shape of an oblate circle, that is to say a circle modified by the replacement of two diametrically opposed arcs by opposed curves whose curvatures are less than the curvature of the circle. These curves therefore constitute inset portions while the remaining arcs of the circle constitute lobes. Preferably, the minimum diameter of the inset portions is at least 90% (preferably at least 95%) of the diameter of the circle and the inset portions preferably subtend an angle of from 20° to 80° to the principal axis of the container so as to produce a nearly cylindrical container which gives the illusion of being cylindrical. Alternatively, the containers may be elliptical in transverse section. Optionally, the curvature of the inset portions may be decreased until the inset portions are flat or even concave. Tetra-lobate and especially bi-lobate containers are the easiest shapes for use in lidding machines.

If desired the inset portions may take the form of narrow longitudinal re-entrant flutes, each flute preferably providing less than 10% of the internal transverse perimeter of the container. It is also preferred that the flutes be curved in transverse section since this facilitates the shaping process.

If the protruding portions of the body were parallel to the principal axis of the container, such an arrangement would provide a maximum line of contiguity between contiguous containers. However, the core component of the mould is more easily withdrawn from the container if the protruding and inset portions are inclined so that the container tapers towards its base.

Preferably, the portions are inclined at an angle of from 0.1° to 3° (especially 0.2° to 0.6°) to the principal axis. Provided small inclinations are employed the taper does not seriously interfere with the ability of containers to pack together efficiently or to be stable in processing lines possibly because the resilience of the container accommodates the taper sufficiently to allow a useful length of contiguity between contiguous containers.

It is preferred that the transverse sectional area of the mouth be at least 85% of the maximum transverse sectional area of the body. Lids suitable for application to the mouths of the containers preferably have dependent skirts which engage about the perimeter of the mouth. Engagement may be simply by a push fit but preferably the skirt and perimeter are adapted to provide a positive engagement, for example, by providing them with mating screw threads or profiles which engage with a snap action.

The containers may be shaped from any materials which can be made to comply with the shape of the core component of the mould. For example, sheets of ductile metal may be swaged around the core or sheets of heat-softened thermoplastics may be vacuum-formed around the core. Preferably, the containers are made by injecting fluid material into the core-and-cavity mould. The fluid material may be a curable synthetic resin but preferred fluid materials are molten thermoplastic polymers, especially thermoplastic polyolefins including polystyrene. Suitable aliphatic polyolefins include polyethylenes of low or high density, crystalline copolymers of ethylene with up to 20% by weight of methyl, ethyl or butyl acrylate or methacrylate or vinyl acetate, or crystalline polymers of propylene. Although propylene homopolymer may be used, adjacent containers are better able to accommodate tapered body parts if the polymer is one in which propylene is copolymerised with ethylene either as a random copolymer of propylene and a minor amount of ethylene or as a sequential copolymer of propylene with up to 15% by weight of ethylene made by injecting the ethylene into the latter stages of what would otherwise have been a homopolymerisation of propylene. Alternatively, propylene homopolymer may be blended with up to 20% by weight of a rubber, for example, diene modified ethylene/propylene rubber. The melt flow index of the polyolefin is preferably from 1.5 to 30 grams per 10 minutes when measured according to British Standard 2782:Part 1/105C/1970 using a 2.16 kg load and performed at 190°C in the case of the ethylene polymers and at 230°C in the case of the propylene polymers.

The invention is further illustrated by the following preferred embodiments described with reference to the drawings of which:

Figure 1 shows in perspective a bi-lobate container having flat inset portions.

Figure 2 shows in section a skirted lid suitable for use on the container shown in Figure 1.

Figure 3 shows on a smaller scale a transverse section of the body of the container on the line AA of Figure 1.

Figure 4 shows a longitudinal section of the container on the line BB of Figure 3.

Figure 5 shows a longitudinal section of the container on the line CC of Figure 3.

Figure 6 shows diagrammatically a notional arrangement in which the inset portions of Figure 3 are removed and the protruding portions or lobes are moved notionally together.

Figure 7 shows on a larger scale a core suitable for use in shaping the container shown in Figure 1.

Figure 8 shows on a smaller scale in section the core of Figure 7 in position in a core-and-cavity mould.

Figure 9 shows in section the mould of Figure 8 with the second segment of the core withdrawn and the first segments closed together.

Figure 10 shows a section on the line DD of Figure 8 after the cores have been moved together as shown in Figure 9.

Figures 11 and 12 show a modification of the mould shown in Figures 8, 9 and 10.

Figure 13 shows in detail on a larger scale and in section part of a modified container and lid on which a second container is stacked.

Figure 14 shows in section a further modification of the container of Figure 1.

Figure 15 shows in perspective a lidded tri-lobate container.

Figure 16 shows in section a core for shaping the tri-lobate container of Figure 15.

Figure 17 shows in perspective a lidded fluted container.

Figure 18 shows a section on the line EE of Figure 17.

Figure 19 shows in perspective a lidded rectangular container.

Figure 20 shows in section a core for shaping the container of Figure 19.

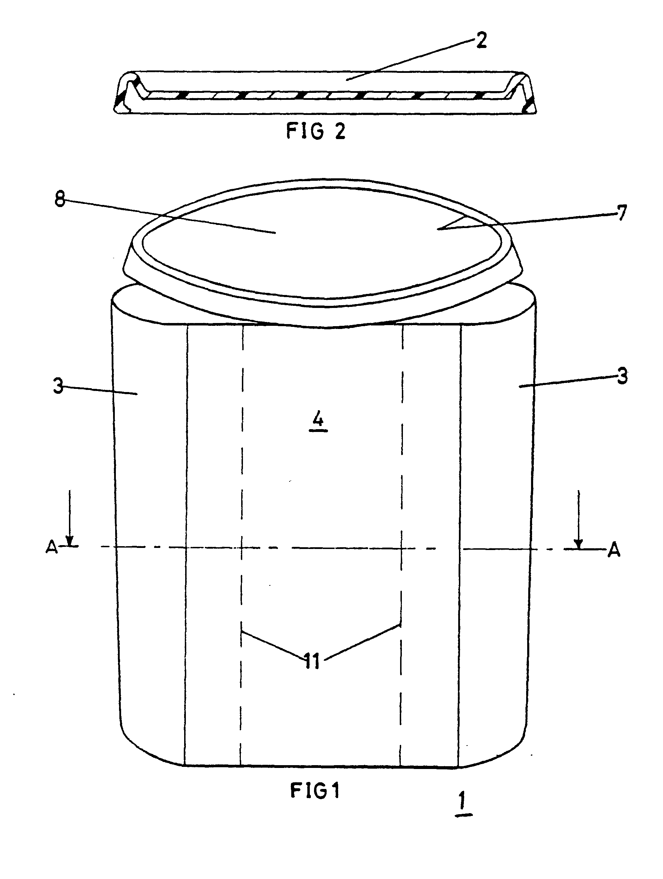

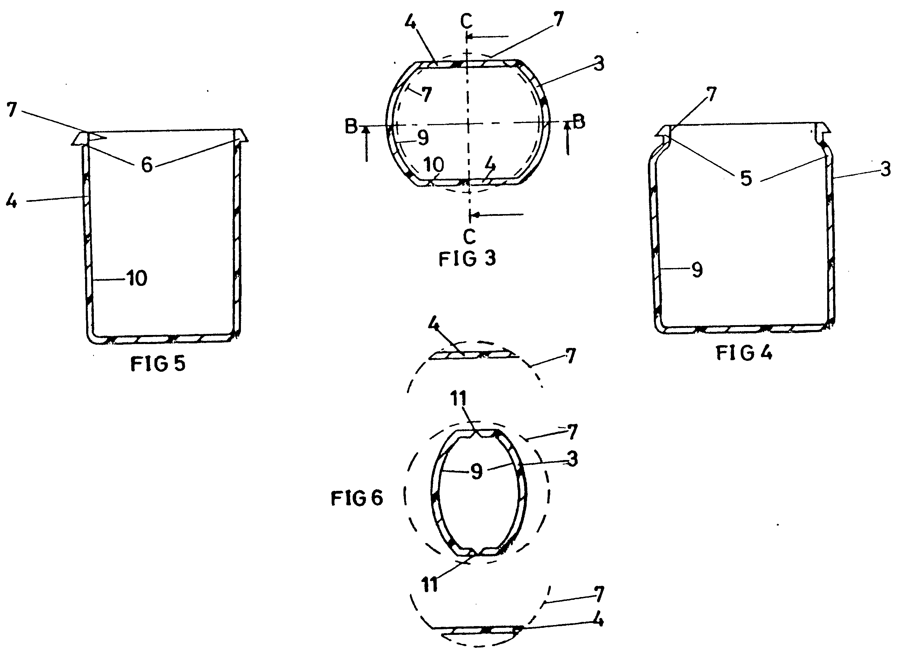

Figure 1 shows an open-mouth container 1 having a body composed of two longitudinal protruding portions or lobes 3 extending in the direction of the principal axis of the container and two flat inset portions 4 which are inset relative to lobes 3. Lobes 3 and flat inset portions 4 have extensions 5 and 6 respectively which are shown in Figures 4 and 5. Extensions 5 and 6 together define perimeter 7 of the open mouth 8. The extensions 5 of lobes 3 extend inwardly of the body so that inner surfaces 9 of lobes 3 lie outside (and are therefore undercut by) perimeter 7 of open mouth 8 as is shown in Figure 3. This enables a suitably sized circular lid 2 as shown in Figure 2 to be applied to perimeter 7 without overhanging lobes 3.

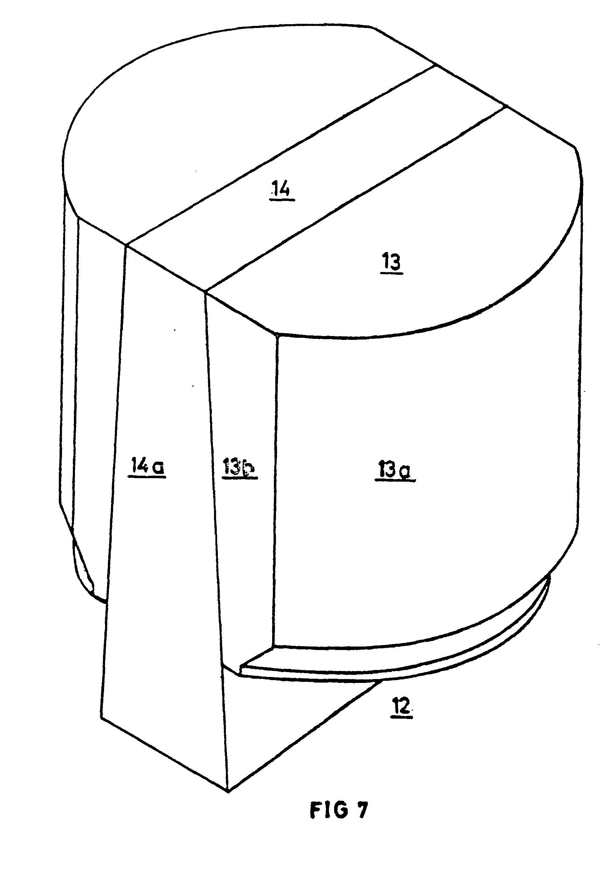

In contrast extensions 6 are straight extensions of flat inset portions 4 not extending inwards of the body. Accordingly, as is shown in Figure 3, inner surfaces 10 of inset portions 4 lie within perimeter 7 of open mouth 8. This means that if inset portions 4 are notionally removed from container 1 as shown in Figure 6 and lobes 3 are notionally moved inwards until their longitudinal boundaries 11 (see Figure 1) touch, then their inner surfaces 9 would define a notional surface as shown in Figure 6 which could notionally be passed through open mouth 8. The importance of this is that it enables container 1 to be shaped around a core 12 as shown in Figure 7 despite the undercutting of lobes 3 by perimeter 7 for reasons which will now be explained.

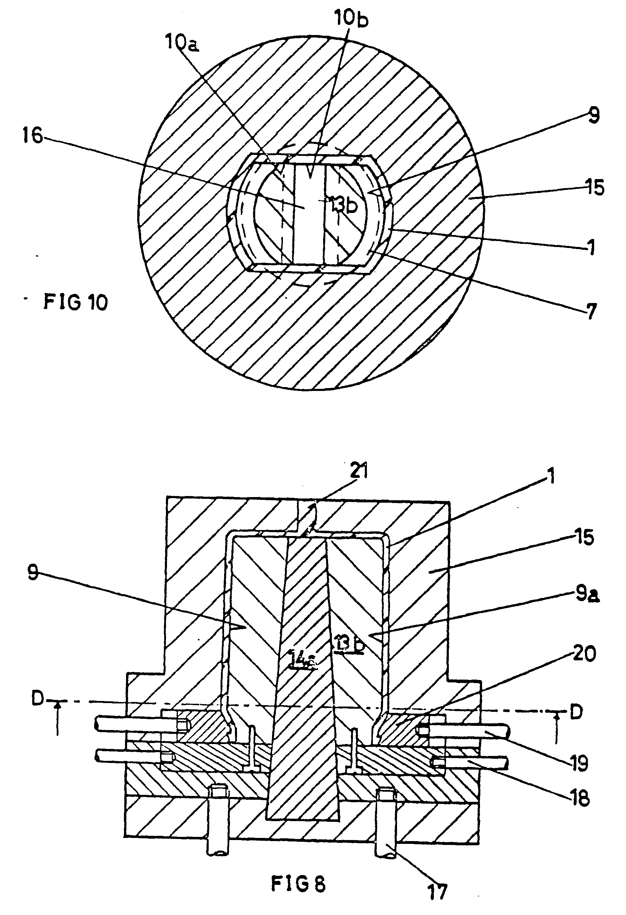

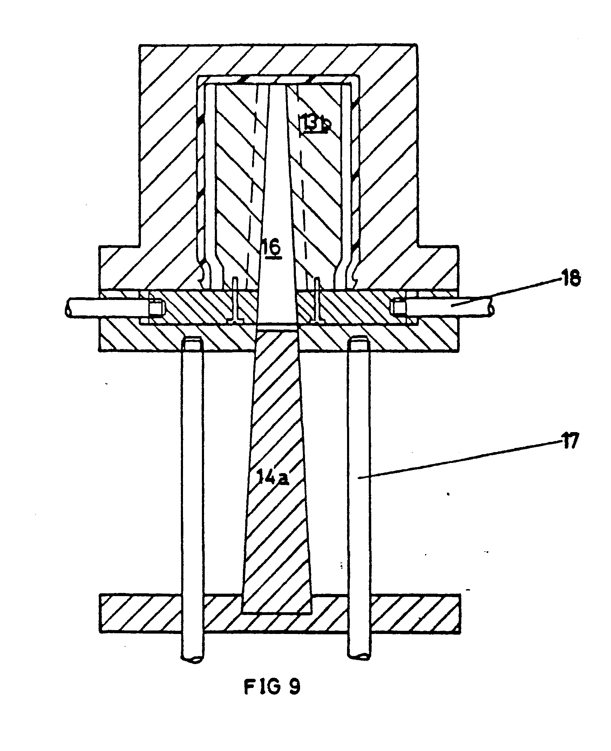

Core 12 has first segments 13 separated by tapered second segment 14. During moulding in a mould comprising core 12 and cavity 15 as shown in Figures 8, 9 and 10 the internal surfaces 9 of lobes 3 and part 10a of the internal surface 10 of flat inset portion 4 are defined respectively by outer longitudinal surfaces 13a and 13b of first segments 13. At the same time, the remainder 10b of the internal surface 10 of flat inset portion 4 is defined by outer longitudinal surface 14a of second segment 14. Extension 6 does not extend inwards of flat inset portion 4, with the result that flat inset portion 4 does not undercut perimeter 7 of open mouth 8. Therefore second segment 14 of core 12 can be withdrawn from newly moulded container 1 through its open mouth 8 whereupon it vacates space 16 shown bounded by dashed lines in Figure 9. First components 13 are moved into space 16 (as shown bounded by dashed lines in Figure 10) and then they can be withdrawn together through perimeter 7 of open mouth 8. Hence, despite the undercutting of lobes 3 by perimeter 7, core 12 can be withdrawn from container 1 with a minimum of three movements of segments 13 and 14 rela-

tive to container 1.

The mould shown in Figures 8, 9 and 10 is provided with bars 17 which guide second segment 14 during its withdrawal. Push rods 18 are provided which are used to move first segments 13 into space 16 vacated by second segment 14 whereafter cavity 15 and container 1 can be lifted clear of first segments 13 during which movement first segments 13 are passed through open mouth 8. Retractable bars 19 are provided to retract components 20 of cavity 15 so that container 1 can be knocked out of cavity 15 by a blow on sprue 21.

The lobes 3 and inset portions 4 of container 1 are tapered at an angle of 0.25° to the principal axis of container 1 to facilitate withdrawal of second segment 14 and the knocking of container 1 out of cavity 15. The taper is exaggerated for clarity in Figures 1, 4, 5, 8, 10, 11 and 12.

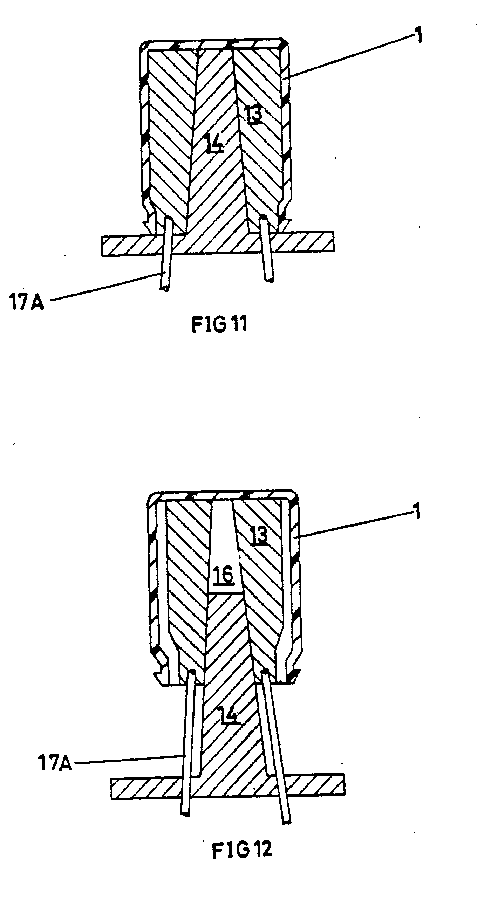

Figures 11 and 12 show a modification to the mould shown in Figures 8, 9 and 10. The modification consists of providing inclined guide bars 17a so that withdrawal of second segment 14 causes a closing together of guide bars 17a which in turn causes a simultaneous movement of first segments 13 into space 16. The modification has the advantage of obviating the use of push rods 18.

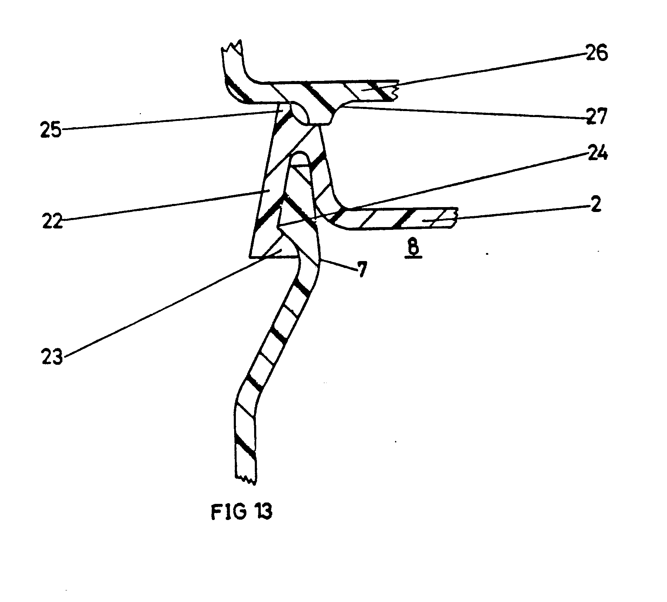

Figure 13 shows circular lid 2 fitted into perimeter 7 of open mouth 8. Lid 2 has a dependent skirt 22 provided with a lip 23 which makes a snap-action fit over a co-operating barbed profile 24 of extensions 5 and 6. Lid 2 is modified by the provision of an upstanding circumferential flange 25 and base 26 of the container is modified by the provision of dependent studs 27. Flange 25 and studs 27 co-operate to locate stacked lidded containers one on top of another.

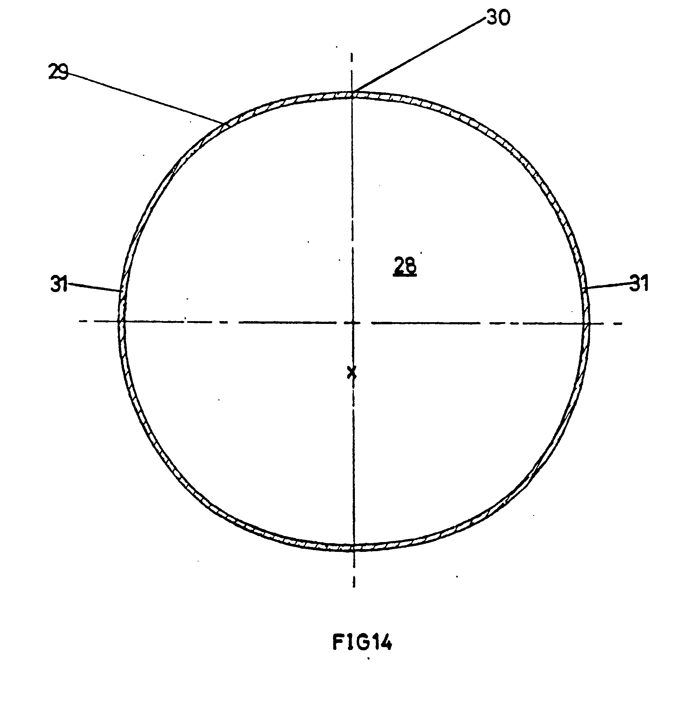

Figure 14 shows a modified container body 28 which is a modification of the body of container 1. Like the body of container 1, the modified container body 28 has lobes 31 which are arcs of a common circle. The modification consists of replacing flat inset portions 4 of the body of container 1 by curved inset portions 29. The minimum diameter of the modified container body 28 through midpoints 30 of inset portions 29 is 96% of the diameter of common circle on which lobes 31 lie. The inset portions 29 subtend an angle of 60° to the principal axis with the result that in section transverse to the principal axis, container body 28 has the shape of an oblate circle. The curvature of inset portions 29 is merged into the curvature of lobes 31 and this disguises the presence of inset portions 29 and gives the modified container body 28 a cylindrical appearance.

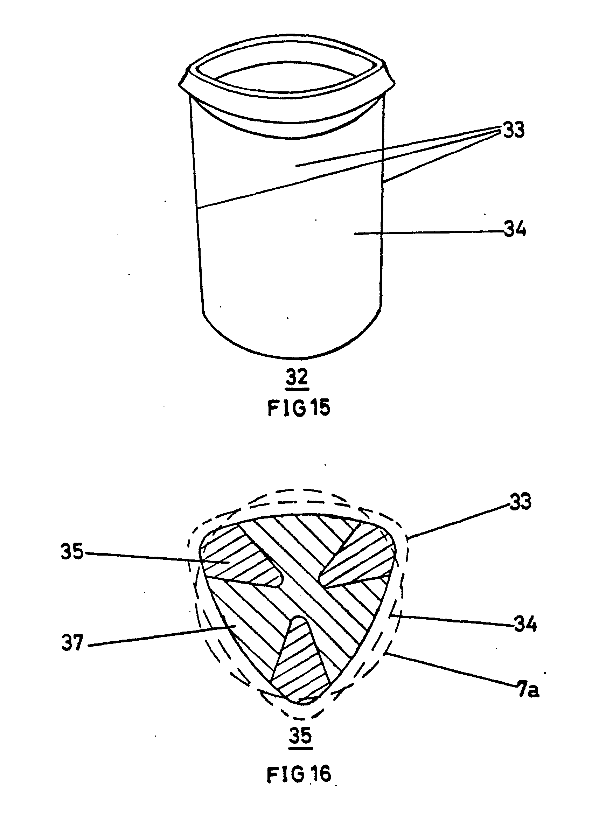

Figure 15 shows a lidded tri-lobate container 32 having three lobes 33 and three curved inset portions 34.

Figure 16 shows a core 35 suitable for using in shaping container 32. Core 35 consists of three first segments 36 separated by a three-armed second segment 37.

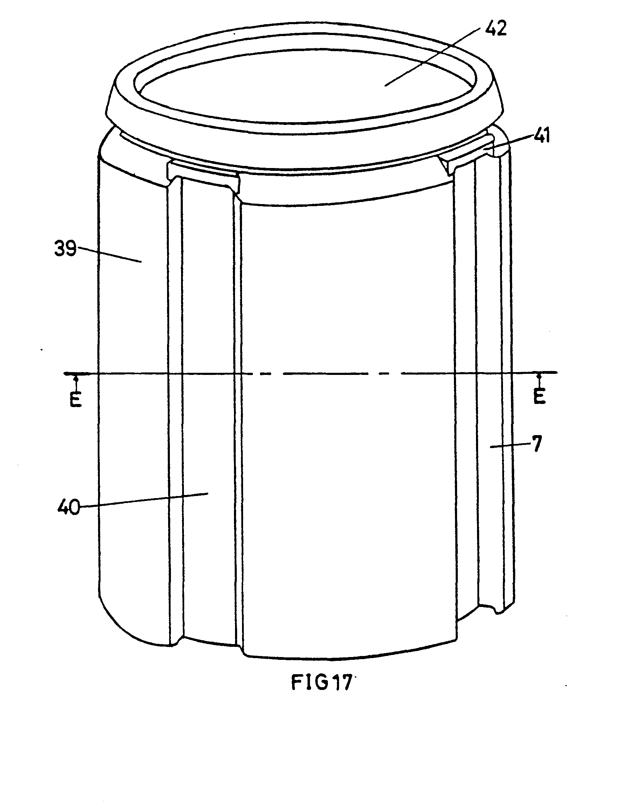

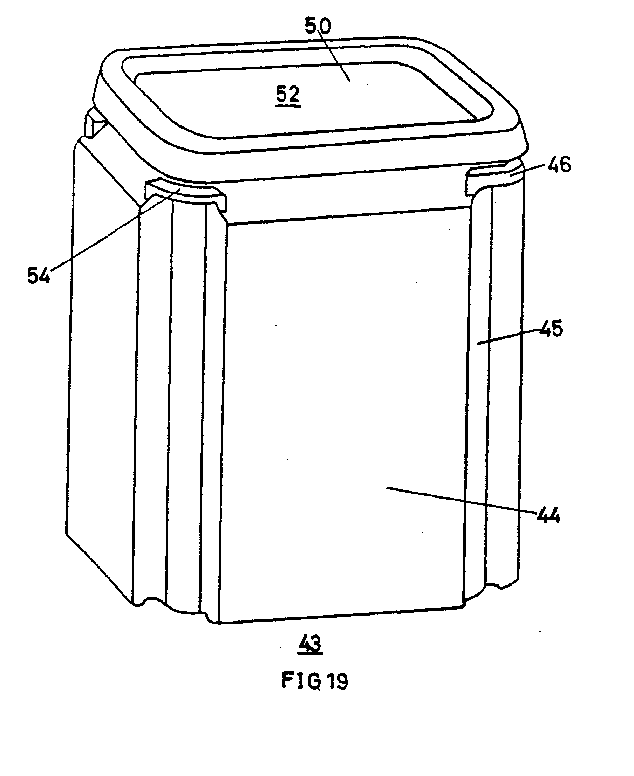

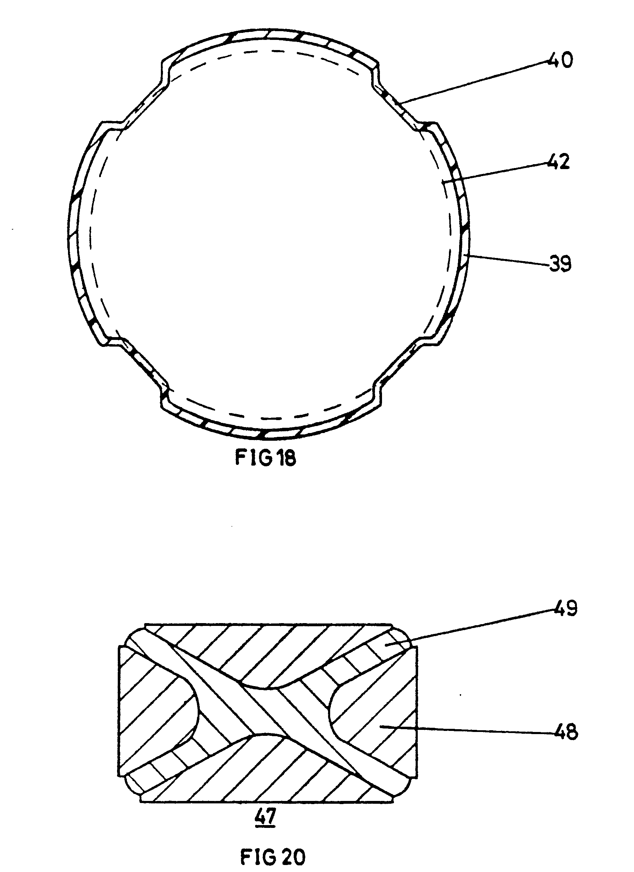

Figures 17 and 18 show a lidded container 38 having four lobes 39 and inset portions which are longitudinal flutes 40. Ledges 41 are provided over flutes 40 so as to provide a fulcrum for use when levering snap-fitting lid 42 off container 38.

Figures 18 and 19 show a rectangular lidded container 43 having flat protruding portions 44 and fluted inset portions 45 surmounted by ledges 46 each of which provides a fulcrum for use when levering snap-fitting lid 50 off container 43. Figure 20 shows a core 47 suitable for use in shaping container 43. Core 47 consists of four first segments 48 separated by second segment 49.

**Claims**

1. An open mouth one-piece container (1) comprising a generally cylindrical body having longitudinal inset portions (4) and shaped to provide an open mouth (8) which can receive a lid, characterised in that it comprises:

(a) a body composed of at least two longitudinal protruding portions (3) the inner surface (9) of each protruding portion (3) lying outside the perimeter (7) of the open-mouth (8) and at least two longitudinal portions (4) inset relative to the protruding portions, the said portions having inner surfaces (9, 10) which define the inner surface of the body and

(b) extensions (5, 6) of the protruding and inset portions (3, 4) of the body which extensions define the perimeter (7) of the mouth (8) of the container, wherein the mouth-defining extension (5) of each protruding portion (3) extends inwardly of the inner surface (9) of that protruding portion; and in that

(c) the protruding portions (3) lie sufficiently far beyond the perimeter (7) of the open mouth (8) that an applied lid (2) will not overhang the protruding portion (3)

(d) the inner surface (10) of each inset portion (4) lies not outside the perimeter (7) of the mouth (8) so that the mouth-defining extension (6) of each inset portion (4) does not extend inwardly of the inner surface (10) of that inset portion, and

(e) the dimensions of the inner surfaces (9, 10) of the protruding and inset portions (3,4) are such that if the inset portions (4) were notionally removed from the body and the protruding portions (3) were notionally moved inwards until they touched along their longitudinal boundaries (11), then the notional inner surface defined by the inner surfaces of the touching protruding portions would be capable of being passed through the mouth (8) of the container.

2. A container according to claim 1 characterised in that the protruding (33) and inset portions (34) of the body are curved in section transverse to the principal axis, the protruding portions (33) being of greater curvature than the inset portions (34).

3. A container according to claim 2 characterised in that the body of the container in section transverse to the principal axis is bi-lobate.

4. A container according to claim 3 characterised in that the body of the container in section transverse to the principal axis has the shape of an oblate circle.

5. A container according to claim 4 characterised in that the minimum diameter of the inset portions (29) of the body is at least 90% of the maximum diameter of the oblate circle.

6. A container according to claim 5 characterised in that the inset portions (29) subtend an angle of from 20° to 80° to the principal axis of the container.

7. A container according to claim 1 characterised in that the inset portions of the body are re-entrant flutes (40).

8. A container according to claim 7 characterised in that each flute (40) provides less than 10% of the internal transverse perimeter of the container.

9. A process for making a container (1) according to claim 1 which comprises:

a) shaping material around the core component (12) of a mould which defines inner surface of the container wherein the core (12) comprises at least two first segments (13) which define the inner surface of the protruding portions of the body and their undercutting extensions and which are separated from one another by at least one second segment (14) which defines at least part of the inner surfaces of the inset portions of the body,

b) withdrawing the second segment (14) or segments through the mouth of the newly shaped container,

c) moving the first segments (13) into space (16) vacated by the second segment (14) or segments, and

d) withdrawing the first segments (13) together through the mouth.

10. A process according to claim 9 characterised in that while the material is shaped around the core component (12), it is constrained within a cavity component (15) of the mould which shapes the material so as to define the outside surface of the container.

11. A core component (12) for use in the process of claim 9, comprising at least two first segments (13) separated from one another by a single second segment (14) characterised in that the first segments (13) define the inner surfaces of the protruding portions of the body and their undercutting extensions and the second segment (14) defines at least part of the inner surfaces of the inset portions of the body whereby the segments have dimensions such that after withdrawing the second segment (14) through the mouth of a container moulded by the process and moving the first segments (13) into the space (16) vacated by the second segment (14), the first segments (13) can be withdrawn together through the mouth.

12. A core component (12) as claimed in claim 11 in combination with a cavity component (15) which defines the outer surface of the container.

**Patentansprüche**

1. Einstückiger, mit einer Öffnung versehener Behälter (1), der einen allgemein zylindrischen Körper mit länglichen Einsatzteilen (4) hat und so ausgebildet ist, daß er eine Öffnung (8) aufweist, die einen Deckel aufnehmen kann, dadurch gekennzeichnet, daß er umfaßt:

(a) einen aus wenigstens zwei länglichen, herausragenden Teilen (3), wobei die Innenfläche (9) eines jeden herausragenden Teils (3) außerhalb des Umfangs der Öffnung (8) liegt, und aus wenigstens zwei länglichen Teilen (4), die jeweils zwischen die herausragenden Teile eingefügt sind, zusammengesetzten Körper, wobei die genannten Teile Innenflächen (9, 10) haben, die die Innenfläche des Körpers bestimmen, und

(b) Ansätze (5, 6) der herausragenden sowie der eingefügten Teile (3, 4) des Körpers, die den Umfang (7) der Öffnung (8) des Behälters bestimmen, wobei der die Öffnung bestimmende Ansatz (5) eines jeden herausragenden Teils (3) sich nach einwärts gegenüber der Innenfläche (9) dieses herausragenden Teils erstreckt, und daß

(c) die herausragenden Teile (3) ausreichend weit außerhalb des Umfangs (7) der Öffnung (8) liegen, so daß ein angebrachter Deckel (2) nicht über das herausragende Teil (3) vorsteht,

(d) die Innenfläche (10) eines jeden Einsatzteils (4) nicht außenseitlich des Umfangs (7) der Öffnung (8) liegt, so daß der die Öffnung bestimmende Ansatz (6) eines jeden Einsatzteils (4) sich nicht einwärts gegenüber der Innenfläche (10) dieses eingefügten Teils erstreckt, und

(e) die Abmessungen der Innenflächen (9, 10) der herausragenden sowie der eingefügten Teile (3, 4) derart sind, daß, wenn die eingefügten Teile (4) imaginär vom Körper entfernt würden und die herausragenden Teile (3) imaginär einwärts bewegt würden, bis sie sich entlang ihrer Längsränder (11) berühren, dann die imaginäre Innenfläche, die durch die Innenflächen der sich berührenden, herausragenden Teile bestimmt ist, imstande ist, durch die Öffnung (8) des Behälters hindurchzugehen.

2. Behälter nach Anspruch 1, dadurch gekennzeichnet, daß die herausragenden (33) sowie die eingefügten (34) Teile des Körpers im zur Hauptachse querliegenden Querschnitt gekrümmt sind, wobei die herausragenden Teile (33) eine größere Krümmung aufweisen als die eingefügten Teile (34).

3. Behälter nach Anspruch 2, dadurch gekennzeichnet, daß der Körper des Behälters im zur Hauptachse querliegenden Querschnitt mit zwei herausragenden Teilen versehen ist.

4. Behälter nach Anspruch 3. dadurch gekennzeichnet, daß der Körper des Behälters im zur Hauptachse querliegenden Querschnitt die Gestalt eines abgeplatteten Kreises hat.

5. Behälter nach Anspruch 4, dadurch gekennzeichnet, daß der minimale Durchmesser der Einsatzteile (29) des Körpers wenigstens 90% des maximalen Ourchmessers des abgeplatteten Kreises beträgt.

6. Behälter nach Anspruch 5, dadurch gekennzeichnet, daß die Einsatzteile (29) einen Winkel von 20° bis 80° zur Hauptachse des Behälters einschließen.

7. Behälter nach Anspruch 1, dadurch gekennzeichnet, daß die Einsatzteile des Körpers einspringende Kehlen (40) sind.

8. Behälter nach Anspruch 7, dadurch gekennzeichnet, daß jede Kehle (40) weniger als 10% des inneren, querliegenden Umfangs des Behälters bildet.

9. Verfahren zur Herstellung eines Behälters (1) nach Anspruch 1, das umfaßt:

a) Formen von Material um das Kernteil (12) einer Form, die die Innenfläche des Behälters bestimmt, wobei das Kernteil (12) wenigstens zwei erste Segmente (13), die die Innenfläche der herausragenden Teile des Körpers sowie deren hinterschnittene Ansätze bestimmen und die durch wenigstens ein zweites, wenigstens einen Teil der Innenfläche der Einsatzteile des Körpers bestimmendes Segment (14) getrennt sind, aufweist,

b) Herausziehen des zweiten Segments (14) oder der zweiten Segmente durch die Öffnung des neu geformten Behälters,

c) Bewegen der ersten Segmente (13) in den vom zweiten Segment (14) oder den zweiten Segmenten freigemachten Raum (16) und

d) gemeinsames Herausziehen der ersten Segmente (13) durch die Öffnung.

10. Verfahren nach Anspruch 9, dadurch gekennzeichnet, daß während des Formens des Materials um das Kernteil (12) dieses innerhalb eines Hohlraumbauteils (15) der Form, das das Material so ausgestaltet, daß es die Außenfläche des Behälters bestimmt, eingezwängt wird.

11. Kernteil (12) zur Verwendung bei dem Verfahren nach Anspruch 9, das wenigstens zwei erste Segmente (13), die voneinander durch ein einziges zweites Segment (14) getrennt sind, umfaßt, dadurch gekennzeichnet, daß die ersten Segmente (13) die Innenflächen der herausragenden Teile des Körpers sowie deren hinterschnittene Teile bestimmen und das zweite Segment (14) wenigstens einen Teil der Innenflächen der Einsatzteile des Körpers bestimmt, wobei die Segmente derartige Abmessungen haben, daß nach dem Herausziehen des zweiten Segments (14) durch die Öffnung des durch das Verfahren geformten Behälters und Bewegen der ersten Segmente (13) in den vom zweiten Segment (14) freigemachten Raum (16) die ersten Segmente (13) zusammen durch die Öffnung herausgezogen werden können.

12. Kernbauteil (12) nach Anspruch 11 in Kombination mit einem Hohlraumbauteil (15), das die Außenfläche des Behälters bestimmt.

**Revendications**

1. Récipient monobloc (1) à embouchure ouverte, comprenant un corps sensiblement cylindrique à parties longitudinales en retrait (4) et formé de manière à définir une embouchure ouverte (8) qui peut recevoir un couvercle, caractérisé en ce qu'il comprend:

(a) un corps composé d'au moins deux parties longitudinales en saillie (3), la surface intérieure (9) de chaque partie en saillie (3) étant située à l'extérieur du périmètre (7) de l'embouchure ouverte (8), et d'au moins deux parties longitudinales (4) en retrait par rapport aux parties en saillie, lesdites parties présentant des surfaces intérieures (9, 10) qui définissent la surface intérieure du corps, et

(b) des prolongements (5,6) des parties en saillie et en retrait (3,4) du corps, ces prolongements définissant le périmètre (7) de l'embouchure (8) du récipient, de sorte que le prolongement de définition d'embouchure (5) de chaque partie en saillie (3) s'étend vers l'intérieur par rapport à la surface intérieure (9) de cette partie en saillie; et en ce que

(c) les parties en saillie (3) sont situées suffisamment loin en dehors du périmètre (7) de l'embouchure ouverte (8) pour qu'un couvercle en place (2) ne surplombe pas la partie en saillie (3),

(d) la surface intérieure (10) de chaque partie en retrait (4) ne se trouve pas à l'extérieur du périmètre (7) de l'embouchure (8), de sorte que le prolongement de définition d'embouchure (6) de chaque partie en retrait (4) ne s'étend pas vers l'intérieur par rapport à la surface intérieure (10) de cette partie en retrait, et

(e) les dimensions des surfaces intérieures (9, 10) des parties en saillie et en retrait (3, 4) sont telles que si les parties en retrait (4) étaient imaginairement enlevées du corps et si les parties en saillie (3) étaient imaginairement déplacées vers l'intérieur jusqu'à ce qu'elles se touchent le long de leurs limites longitudinales (11), alors la surface intérieure imaginaire définie par les surfaces intérieures des parties en saillie mises en contact pourrait passer à travers l'embouchure (8) du récipient.

2. Récipient suivant la revendication 1, caractérisé en ce que les parties en saillie (33) et en retrait (34) du corps sont courbes en section transversale à l'axe principal, les parties en saillie (33) ayant une courbure plus grande que celle des parties en retrait (34).

3. Récipient suivant la revendication 2, caractérisé en ce que le corps du récipient est bilobé en section transversale à l'axe principal.

4. Récipient suivant la revendication 3, caractérisé en ce que le corps du récipient présente la configuration d'un cercle aplati aux pôles en section transversale à l'axe principal.

5. Récipient suivant la revendication 4, caractérisé en ce que le diamètre minimal des parties en retrait (29) du corps est au moins de 90% du diamètre maximal du cercle aplati.

6. Récipient suivant la revendication 5, caractérisé en ce que les parties en retrait (29) sous-tendent un angle de 20° à 80° par rapport à l'axe principal du récipient.

7. Récipient suivant la revendication 1, caractérisé en ce que les parties en retrait du corps sont des cannelures rentrantes (40).

8. Récipient suivant la revendication 7, caractérisé en ce que chaque cannelure (40) représente moins de 10% du périmètre transversal interne du récipient.

9. Procédé de fabrication d'un récipient (1) suivant la revendication 1, qui comprend:

(a) le formage d'une matière autour du noyau (12) d'un moule qui définit la surface intérieure du récipient, le noyau (12) comprenant au moins deux premiers segments (13) qui définissent la surface intérieure des parties en saillie du corps et leurs prolongements taillés en retrait et qui sont séparés l'un de l'autre par au moins un deuxième segment (14) qui définit au moins une partie des surfaces intérieures des parties en retrait du corps,

(b) l'extraction du deuxième segment (14), ou des deuxièmes segments, à travers l'embouchure du récipient nouvellement formé,

(c) l'amenée des premiers segments (13) dans l'espace (16) laissé libre par le ou les deuxièmes segments (14), et

(d) l'extraction des premiers segments (13) ensemble à travers l'embouchure.

10. Procédé suivant la revendication 9, caractérisé en ce que, pendant le formage de la matière autour du noyau (12), la matière est retenue à l'intérieur d'un composant (15) délimitant la cavité du moule qui forme la matière de manière à définir la surface extérieure du récipient.

11. Noyau (12) utilisable dans le procédé de la revendication 9, comprenant au moins deux premiers segments (13) séparés l'un de l'autre par un unique deuxième segment (14), caractérisé en ce que les premiers segments (13) définissent les surfaces intérieures des parties en saillie du corps et leurs prolongements en retrait et en ce que le deuxième segment (14) définit au moins partiellement les surfaces intérieures des parties en retrait du corps, les segments ayant des dimensions telles que, après extraction du deuxième segment (14) à travers l'embouchure d'un récipient moulé par le procédé et déplacement des premiers segments (13) dans l'espace (16) laissé libre par le deuxième segment (14), on peut extraire les premiers segments (13) ensemble à travers l'embouchure.

12. Noyau (12) suivant la revendication 11, en combinaison avec un composant creux (15) qui définit la surface extérieure du récipient.

EP 0 000 823 B1

FIG 2

FIG 1

FIG 4

FIG 3

FIG 6

FIG 5

FIG 7

FIG 10

FIG 8

FIG 9

FIG 11

FIG 12

FIG 13

FIG14

**32**

FIG 15

**35**

FIG 16

9

FIG 17

FIG 19

FIG 18

FIG 20